# EUROPEAN PATENT APPLICATION

(11) **EP 0 740 193 A1**
(43) Date of publication of application: **30.10.1996**
(21) Application number: 96420130.5
(22) Date of filing: 18.04.1996
(51) Int. Cl.: G03B 27/52, G03B 27/46

(54) **Punch perforation detection of unprocessed paper in photographic printers**

(30) Priority: 27.04.1995 US 429997
(71) Applicant: EASTMAN KODAK COMPANY, Rochester, New York 14650-2201 (US)
(72) Inventor: Townsend, Ensley E., c/o Eastman Kodak Company, Rochester, New York 14650-2201 (US); Lucey, James Kenneth, c/o Eastman Kodak Company, Rochester, New York 14650-2201 (US)
(74) Representative: Buff, Michel

(57) **Abstract**

A photographic printer having a perforation punch for forming perforations between prints and orders on a web of unprocessed photographic paper, is provided with a perforation detector for detecting a perforation in the web of unprocessed photographic paper. The perforation detector is employed to verify correct perforation, and/or to locate the photographic paper at an index print station.

## Description

### FIELD OF THE INVENTION

The invention relates generally to the field of photofinishing, and in particular to photographic printers. More specifically, the invention relates to punch perforations employed to mark photographic paper in a photographic printer.

### BACKGROUND OF THE INVENTION

Punch perforations in a continuous web of photographic paper are made between prints during printing in an automated photographic printer and are later used at a finishing station to separate the individual prints within an order and to separate orders within a roll of processed paper. At the finishing station high energy visible (white) light is used to detect the punch perforations on processed paper which is no longer light sensitive. Current photographic printers do not have punch perforation detection. Consequently, the absence of perforations is not known until the paper is removed from the printer. When perforations are absent the photofinisher has two choices to complete the job: (1) repeat the job with a new roll of paper, and (2) process the perforationless paper and manually separate the prints. In either case the absence of perforations is very costly to the photofinisher.

Recently, photofinishers have been offering an index print along with the regular photographic prints (service prints). An index print is a single print with a number of small images representing the frames on a roll of film. Each image is accompanied by an index number that facilitates print reordering. U.S. patent 4,933,773, issued June 12, 1990, to Shiota et al., shows a photographic printer with a built in CRT printer for making an index print at the end of a group of service prints. A Color TV camera scans each negative as it is being printed and stores the image in a frame memory. At the end of an order, a mirror is switched into the printing path of the printer and a CRT is used to expose the index print onto the photographic paper. For existing printers, there may not be enough space to locate the index printer at the service print station. In such event, it will be necessary to locate the index printer remotely from the service print station. The problem then becomes how to accurately locate the paper in the index print station to avoid overlapping the index prints and service prints.

### SUMMARY OF THE INVENTION

The present invention is directed to overcoming one or more of the problems set forth above. Briefly summarized, according to one aspect of the present invention, a photographic printer having a perforation punch for forming perforations between prints and orders on a web of unprocessed photographic paper, is provided with a perforation detector for detecting a perforation in the web of unprocessed photographic paper.

In a preferred embodiment of the invention, the perforation detector includes an infrared emitter and detector pair with the appropriate wavelength. The aperture widths of both emitter and detector are selected to minimize the effects of dust and to increase the reliability of the detector. The emitter is mounted adjacent to the base (non-emulsion) side of the paper and the detector adjacent to the emulsion (light sensitive) side so that fogging of the paper is minimized. The paper normally blocks the infrared radiation from the emitter so that the signal does not reach the detector. When paper is transported through the printer the presence of perforations allow the infrared radiation to reach the detector, causing the perforations to be detected by the corresponding control electronics. When perforations are created by the punches and they are not detected by the infrared emitter and detector pair, a failure of one or more components in the system occurred. The control electronics can then warn the printer operator or shut down the printer until the failure is corrected. In a preferred embodiment of the invention, a jet of air is directed between the emitter and detector to prevent dust from accumulating on the infrared emitter.

In a printer having an index print station remote from the service print station, a perforation made at the service print station is detected at the index print station for locating the photographic paper in the index print station.

One advantage of the invention is the reliable detection of punch perforation in unprocessed photographic paper without fogging of the paper. This eliminates paper waste when perforations are not created due to paper tracking failures or punch system failures.

These and other aspects, objects, features and advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is a schematic diagram of a photographic printer including a perforation sensor according to the present invention;
FIG. 2 is an illustration showing a photographic paper on which frames of a negative film and an index print are printed;
FIG. 3 is a perspective view of the infrared emitter and detector pair employed as a perforation detector according to a preferred embodiment of the present invention;
FIG. 4 is a top view of the service print station of the photographic printer showing the perforation punches and perforation detectors;
FIG. 5 is circuit diagram showing the infrared perforation sensor connected to the control electronics of the printer; and
FIG. 6 is a diagram illustrating the operation of the perforation sensor according to the present invention.

To facilitate understanding, identical reference numerals have been used, where possible, to designate identical elements that are common to the figures.

### DETAILED DESCRIPTION OF THE INVENTION

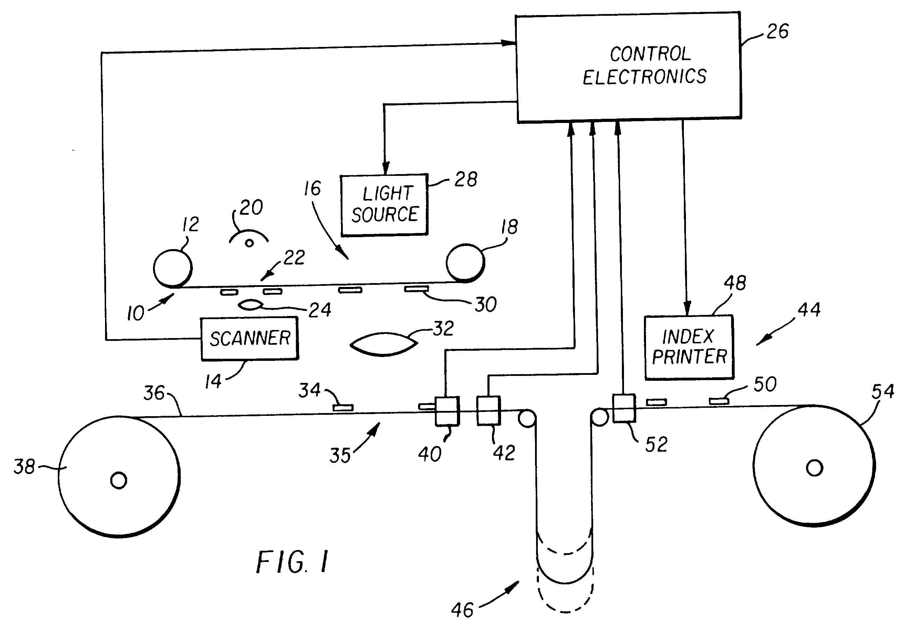

Referring to FIG. 1, a schematic diagram of a photographic printer such as a Kodak CLAS 35 High Speed Printer modified to include an index print station and perforation sensors according to the present invention. In the illustrated printer, a roll of processed photographic film 10 is advanced by transport means (not shown) from a supply reel 12 through an exposure determination film scanner 14 and a photographic print station 16 to a take up reel 18. Exposure determination scanner 14 is typically provided with a light source 20 to shine light through a film frame on film 10 positioned in film gate 22. The resultant image light is focused by a lens 24 onto the film scanner 14, which may take the form of any of a variety of scanning devices such as a linear or two dimensional area array charge coupled device (CCD) or a Nipkow disk or video camera. The output of the film scanner 14 is sent to control electronics 26 where it is used to both control exposure in the photographic printer and to provide the image signal for creating the index prints as described below.

The photographic print station 16 includes a light source 28, a film gate 30, focusing optics 32 and a print gate 34. A length of photographic print paper 36 is advanced by suitable transport means (not shown) through service print station 35 from supply reel 38 in synchronism with advance of film 10. The images on film 10 are successively exposed onto print paper 36 with suitable adjustment of exposure conditions determined by control electronics 26.

A pair of paper punches 40, one on each edge of the paper 36 are arranged to generated perforations between prints within an order and between orders. The paper punches 40 are actuated by control electronics 26 to make appropriate perforations in synchronism with the advance of the paper and film through the printing station 16. In accordance with the present invention, a pair of perforation sensors 42 are located adjacent the paper punches 40. The perforation sensors 42 sense the successful completion of expected perforations and signal control electronics 26. If an expected perforation is not sensed, control electronics 26 will alert the printer operator for corrective action.

According to another aspect of the present invention, the printer is provided with an index print station 44 located remotely from the service print station 35. A paper accumulation loop 46 is provided between the service print station 35 and the index print station 44 to accommodate orders with different numbers of prints. The index print station 44 includes an index printer 48 that receives digital image signals from control electronics 26 to form an image of the index print through an index print gate 50. The index printer may comprise, for example, a color CRT or a monochrome CRT with color filters. In operation with the index printer 48, the printer advances an unexposed frame at the service print station 35 at one end or the other of an order and indicates the location of the unexposed frame by an end or beginning of order perforation. A pair of perforation sensors 52 (one on each edge of the paper) senses the end or beginning of order perforations made by paper punches 40 at the service print station 35, to accurately locate the unexposed frame on paper 36 in the index print gate 50. Finally the exposed paper 36 is taken up on a paper take up 54.

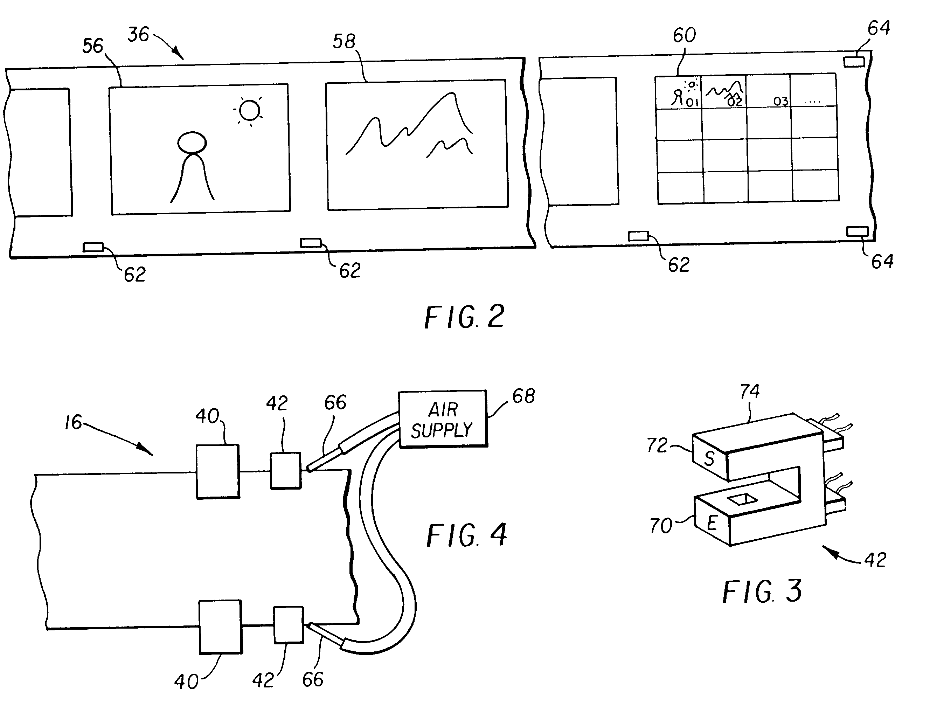

Referring now to FIG. 2, an exposed developed strip of photographic paper is shown on which frames 56, 58, and 60 are shown. Frame 60 is printed as an index print by exposing the paper 36 in the index print station 44. Prints within an order (e.g. prints 56 and 58) are separated by perforations 62 on only one edge of the paper. The location of the index print 60 and the end of order are indicated by perforations 64 on both edges of the paper.

Referring to FIG. 3, a preferred embodiment of the perforation sensor 42 is shown. The perforation sensor 42 is an infrared emitter detector pair having an emitter 70 and a detector 72 mounted in a U-shaped support frame 74. In the service print station 35, the sensor's optical center is 12.7mm from the center of the punch 40. The sensor 42 is mounted so that the emitter 70 is adjacent to the base (non-emulsion) side of the paper 36 and the detector 72 adjacent to the emulsion (light sensitive) side of the paper 36. This arrangement helps to minimize fogging of the paper. The preferred sensor is an Optek Technology, Inc. Slotted Optical Switch, part number OPB980N11. The OPB980N11 Slotted Optical Switch has an aperture width of 0.25mm in front of both the emitter and the detector.

Referring to FIG. 4, a top view of the pair of paper punches 40 and pair of perforation detectors 42 at the service print station 35 of the printer are shown. In a preferred embodiment of the invention, a pair of nozzles 66 connected to a compressed air supply 68 are located to direct a stream of air between the emitter 70 and detector 72 to prevent paper dust from the paper punches 40 from accumulating on the emitters 70. Also, it is preferred to mount the perforation sensors 52 close to the paper punches 40, preferably on the punch die itself within 10 to 20mm of the punch. Having the sensor mounted on the punch mechanism and close to the punch enables detection of perforations when the paper is moving at slow speeds. This increases the reliability of the detection and reduces the magnitude of the emitter current required. When the paper tracks incorrectly in the service print station 35, one edge or the other of the paper will be outside of one of the punches and the corresponding perforation will not be created and therefore will not be detected. Thus, the close proximity of the punch and the sensor enables the sensor to double as a paper tracking failure sensor.

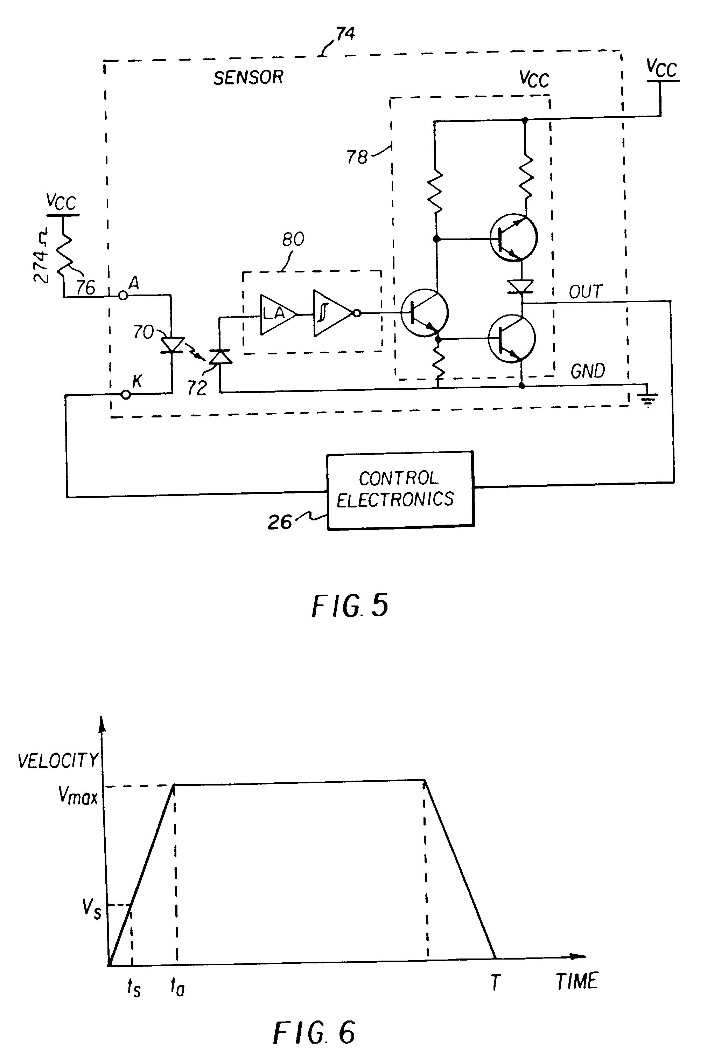

Referring to FIG. 5, a circuit diagram illustrates how the sensor is connected to the control electronics 26. The 274 ohm resistor 76 limits the emitter current to an optimal value of 12 milliamperes for most currently available color photographic papers. Although the emitter 70 can tolerate a maximum current of 40 milliamperes, if the emitter is driven at more than 12 milliamperes, the paper 36 becomes transparent to the infrared radiation resulting in failure to detect a perforation. This threshold may vary with different types of paper. If paper 36 is not transported through the printer for an extended period of time the control electronics 26 will turn off (disable) the sensor 42. This will prevent fogging of the paper when it is stationary for long durations. The sensor's output is a TTL totem pole configuration 78 with internal buffer and hysteresis amplifier 80 to improve stability. When the control electronics 26 powers the detector, electrical current flows through the emitter 70 which then emits infrared radiation. The wavelength of the infrared radiation is between 880 nanometers and 890 nanometers. When the infrared radiation from the emitter is blocked by paper or other objects and does not reach the detector 72, the output of the detector registers a logic '1' level. When the infrared radiation reaches the detector its output registers a logic '0' level. As the control electronics 26 advances paper past the sensor, the presence of a punch perforation causes the control electronics to read a logic '0' level.

During the paper advance the control electronics reads a logic '1', followed by a logic '0', and then a logic '1'. The control electronics advances known lengths of paper which correspond to given photographic print sizes. Only one punch perforation is present for each paper advance. If a punch perforation is not detected during the paper advance then a failure of the punch assembly, the paper transport and tracking system, or the perforation detection system has occurred. In either case the control electronics 26 will then be able to report the failure and take the appropriate action.

Fig. 6 shows a trapezoidal velocity profile for a 12.7cm paper advance. The maximum velocity Vₘₐₓ is 2.5m/sec., the acceleration time tₐ is 14 milliseconds, and the motion time T is 65 milliseconds. The area under the velocity vs. time curve (the trapezoid) is equal to the paper advance length of 12.7cm. The distance the paper advances when the punch perforation is detected is 12.7mm. Therefore the velocity of the paper Vₛ when the punch perforation is detected is calculated to be 6.73cm/sec. At this slow velocity the 1.0mm wide punch perforation allows sufficient infrared radiation to reach the detector which then produces a wide pulse width output signal. Since the paper velocity is low when the punch perforation is detected, only a low level of infrared radiation is required to enable reliable detection. The low level of radiation also minimizes paper fogging.

Ultrasonic sensors and pressure differential sensors may be used instead of infrared sensors. These would avoid paper fogging problems but their larger physical sizes would create problems if used in the application described here.

The invention has been described with reference to a preferred embodiment. However, it will be appreciated that variations and modifications can be effected by a person of ordinary skill in the art without departing from the scope of the invention.

### PARTS LIST

- 10: film
- 12: supply reel
- 14: film scanner
- 16: print station
- 18: take-up reel
- 20: light source
- 22: film gate
- 24: lens
- 26: control electronics
- 28: liaht source
- 30: film gate
- 32: focusing optics
- 34: print gate
- 35: service print station
- 36: print paper
- 38: supply reel
- 40: paper punches
- 42: sensors
- 44: print station
- 46: paper accumulation loop
- 48: index printer
- 50: index print gate
- 52: sensors
- 54: paper take-up
- 56: frame
- 58: frame
- 60: frame
- 62: between print perforations
- 64: end of order perforations
- 66: nozzles
- 68: air supply
- 70: emitter
- 72: detector
- 74: support frame
- 76: ohm resistor
- 78: totem pole configuration
- 80: amplifier

## Claims

1. In a photographic printer having a perforation punch for forming perforations between prints and orders on a web of unprocessed photographic paper, the improvement comprising: a perforation detector for detecting a perforation in the web of unprocessed photographic paper.

2. The improved photographic printer claimed in claim 1, further comprising: means responsive to the perforation detector for generating an alarm signal when a perforation is not detected in an expected location.

3. The improved photographic printer claimed in claim 1, further comprising: an index print station for printing index prints, the perforation detector being located at the index print station; and means responsive to the perforation detector for locating the web of unprocessed photographic paper in the index print station.

4. The improved photographic printer claimed in claim 2 or 3, wherein said perforation detector comprises an infrared emitter detector pair, the emitter arranged on one side of the unprocessed photographic paper, and the detector arranged on the other side such that infrared light will pass from the emitter to the detector in the presence of a perforation.

5. The improved photographic printer claimed in claim 4, wherein said infrared detector is located on the emulsion side of the unprocessed photographic paper.

6. The improved photographic printer claimed in claim 4, wherein said infrared emitter emits in the range of 880 to 890nm.

7. The improved photographic printer claimed in claim 4, wherein the aperture widths of the infrared sensor and emitter are 0.25mm.

8. The improved photographic printer claimed in claim 4, further comprising an air jet for directing a stream of air between the emitter and detector to prevent dust form accumulating on the emitter.

9. An improved method of operating a photographic printer of the type wherein a perforation is formed between prints and orders on a web of unprocessed photographic paper by a punch at a print station of the printer , the improvement comprising the step of: detecting the perforation in the web of unprocessed photographic paper.

10. The improved method of operating a photographic printer claimed in claim 9, further comprising: the step of generating an alarm signal when a perforation is not detected in an expected location.

11. The improved method of operating a photographic printer claimed in claim 9, further comprising the steps of:
a) printing an index print at an index print station in the printer, the index print station being located remotely from the print station in the printer; and
b) detecting the perforation made at the print station to locate the web of unprocessed photographic paper in the index print station.
